# EUROPEAN PATENT SPECIFICATION

(11) **EP 4 155 348 B1**
(45) Date of publication and mention of the grant of the patent: **14.08.2024**
(21) Application number: 22020453.1
(22) Date of filing: 22.09.2022
(51) Int. Cl.: C08L 97/00, C08H 7/00

(54) **CHEMICAL PROCESS FOR GRAFTING CATIONIC MOIETIES ONTO KRAFT LIGNIN, TO PRODUCE WATER SOLUBLE LIGNINS IN ALL PH RANGE, OBTAINED KRAFT LIGNINS AND THEIR USES**
CHEMISCHES VERFAHREN ZUR PFROPFUNG KATIONISCHER EINHEITEN AUF KRAFTLIGNIN ZUR HERSTELLUNG WASSERLÖSLICHER LIGNINE IN JEDEM PH-BEREICH, ERHALTENE KRAFTLIGNINE UND IHRE VERWENDUNGEN
PROCÉDÉ CHIMIQUE POUR GREFFER DES FRACTIONS CATIONIQUES SUR DE LA LIGNINE KRAFT, POUR PRODUIRE DES LIGNINES SOLUBLES DANS L'EAU DANS TOUTE LA PLAGE DE PH, LIGNINES KRAFT OBTENUES ET LEURS UTILISATIONS

(30) Priority: 24.09.2021 PT 2021117481
(43) Date of publication of application: 29.03.2023
(73) Proprietor: RAIZ - Instituto De Investigação Da Floresta E Papel, 3800-783 Eixo, Aveiro (PT); Universidade de Aveiro, 3810-193 Aveiro (PT)
(72) Inventor: EVTYUGIN, Dmitry Victorovitch, 3800-783 Aveiro (PT); LIEBNER, Wolfgang Falk, 3800-783 Aveiro (PT); DUARTE DE FIGUEIREDO PINTO, Patricia Isabel, 3800-783 Aveiro (PT); DE OLIVEIRA RODRIGUES PINTO, Paula Cristina, 3800-783 Eixo, Aveiro (PT)

(56) References cited:
- KONG FANGONG ET AL: "Preparation of cationic softwood kraft lignin and its application in dye removal", EUROPEAN POLYMER JOURNAL, PERGAMON PRESS LTD OXFORD, GB, vol. 67, 15 April 2015 (2015-04-15), pages 335 - 345, XP029230513, ISSN: 0014-3057, DOI: 10.1016/J.EURPOLYMJ.2015.04.004
- PINTO PATRÍCIA I. F. ET AL: "Cationization of Eucalyptus Kraft LignoBoost Lignin: Preparation, Properties, and Potential Applications", INDUSTRIAL & ENGINEERING CHEMISTRY RESEARCH, vol. 61, no. 10, 16 March 2022 (2022-03-16), pages 3503 - 3515, XP093017027, ISSN: 0888-5885, Retrieved from the Internet <URL:https://pubs.acs.org/doi/pdf/10.1021/acs.iecr.1c04899> DOI: 10.1021/acs.iecr.1c04899

## Description

### FIELD OF THE INVENTION

The present invention relates to the area of chemical process for grafting cationic moieties onto kraft lignins, more particularly to a process to produce water-soluble lignins over the entire pH scale, involving the reaction of a lignin extracted from a black liquor obtained by cooking wood by the kraft process, with quaternary ammonium compounds in an aqueous alkaline medium.

### BACKGROUND OF THE INVENTION

To face the daily needs and climate change, there is an increasing interest in the concept of circular bioeconomy applied to the forest and with this, interest in the use of lignin, in particular, as a raw material has been renewed. for chemicals and value-added materials.

Lignin is the second most abundant biopolymer on earth with an estimated annual growth of approximately 40 billion tons [1]. Associated with the polysaccharides cellulose and hemi-cellulose in the cellular architecture of higher plants, lignin imparts strength, hydrophobicity, resistance towards light-induced, chemical and microbial degradation to our terrestrial vegetation, including wood.

Chemical pulping of wood is a global business satisfying the demand of our society for pulp, paper and related products. Respective technologies are still mainly aiming to isolate fibrous cellulose, the primary component, from other wood constituents. The latter - among them are lignin and hemicellulose - are solubilized into the aqueous reaction media to form "spent liquor", the principal by-product of chemical wood pulping. Nowadays, more than 90% of cellulosic pulp is produced by sulphate (or kraft) pulping using sodium hydroxide and sodium sulfide as pulping reagents. Less than 10% is produced by sulfite technologies using SO2 and inorganic bases as pulping reagents. Respective spent liquors contain water-soluble lignins (lignosulfonates) which find use in multiple applications.

Spent liquor (or black liquor) of kraft pulping is dark colored and malodorous. It is typically up-concentrated, partly blended with auxiliaries and subjected to thermal processes to re-cover process chemicals, heat and (surplus) electricity. However, being aware of the relatively low heating value of black liquors [2], economic benefits from lowering the lignin load to the recovery boilers but also boosted by current efforts towards a more biobased economy-my, paper mills are currently exploring new opportunities for enhancing commercialization of by-products, in particular of lignins.
lignosulfonates, the major by-products of sulfite pulping, are being marketed since decades for a variety of large-scale applications. This includes the areas of emulsifiers (asphalt, inks and waxes), dispersants (drilling fluids, clay and ceramics, dyes and pigments), binders (pelletizing of animal feed, ceramics, dust control, confectioning of fertilizers), and concrete plasticizing agents or flooring adhesives. Most of these applications, however, rely on good water-solubility of the respective lignins. Therefore, this business was hitherto largely restricted to lignosulfonates.

Kraft lignins, the by-product of kraft pulping, are water-soluble at high pH only and precipitate upon dilution or lowering the pH. Therefore, they are not suitable for many applications. On the other hand, kraft pulping has nowadays clearly outpaced the various sulfite pulping technologies. Efficient measures are therefore desired capable of imparting good water solubility across the entire pH scale to lignins rendering them competitive with lignosulfonates. This could fill gaps that may arise in the future from receding sulphite pulping business but could pave way for novel mass or niche applications.

Measures capable of adding electrically charged moieties to lignin would be probably the most straightforward approach for increasing its polarity. Among the previously tested strategies targeting the introduction of negatively charged moieties, sulfonation is one of the more facile and understandably most promising approaches to obtain products competitive with lignosulfonates [3-7]. However, the existence of negative charges in materials carrying phenolate, carboxylate, or sulfonate moieties is typically limited to a certain (alkaline) pH range. In acidic media, these moieties exist mainly in non-dissociated form, extent depending on the respective pKS values. The introduction of pH independent, positively charged moieties (cationization) is therefore particularly appealing. This is even more the case since a variety of applications could additionally benefit from physical interaction with negatively charged surfaces, which are abundant in nature. It includes charge-stabilization of inorganic emulsions, modulation of electrical double-layer properties or interactions with microorganisms, viruses or living tissue [8, 9].

The inability of most non-metal main group elements to form stable cations at economically feasible conditions narrows the choice drastically down to quaternary ammonium groups, i.e., nitrogen atoms carrying four organic residues. Grafting of such moieties is typically accomplished by derivatization reagents composed of a reactive group, a short-chain spacer and the quaternary ammonium group. Commonly used reagents are 3-chloro-2-hydroxypropyl-trimethylammonium chloride (CHPTAC), (2,3-epoxypropyl) trimethylammoni-um chloride (EPTAC), diallyldimethylammonium chloride (DADMAC), [2-(methacryloyloxy)ethyl]trimethylammonium chloride (METAC) and (2-hydrazinyl-2-oxo-ethyl)-trimethylazanium chloride (GT) [10, 11].

The cationization of inorganic and organic substrates including biopolymers using reagents such as those mentioned above are common practice. In papermaking for example, it is extensively used to improve the retention of starch, in particular at the wet end of the process. It is achieved by increasing its physical bonding capabilities towards anionic surfaces abundant on both the fibre raw materials and fillers [12]. Cationic cellulose nanofibrils were recently used to produce highly porous (37-48%) yet surprisingly strong cellulose nanopaper (E = 10 GPa, σmax = 200 MPa) which featured high water absorbency (750 g g-1) and surface charge density [13]. In another study, cationic nanofibrillated cellulose (cat-NFC) was shown to feature strong antimicrobial activity against the human pathogens Micrococcus luteus, Escherichia coli and Candida oleophila. The respective material was prepared by i) cellulose treatment with EPTAC, ii) nanofibrillation and iii) redox-initiated graft polymerization of METAC on the surface of cat-NFC in aqueous dispersion state [14].

The potential of biopolymer cationization can be also demonstrated at the example of chitosan, a partially deacetylated derivative of chitin. While chitosan is insoluble in water at pH > 6.4, introduction of quaternary ammonium groups extents its water solubility to the full alkaline range [15, 16]. Cationization also increases its antimicrobial activity [17, 18] and improves its properties as a drug carrier upon crossing epithelia [19, 20]. Cationization of lignin has been hitherto almost exclusively considered for wastewater treatment, requiring relatively small quantities of flocculation agents [21-32] or coagulation aids [27, 33, 34]. Respective studies have covered a broad range of pollutants including sulfate [27] or nitrate ions [22], heavy metal complexes like chromates [28], clay particles like kaolin [23, 27] or bentonite [29, 30], organic dyes [21, 24-26, 32, 34] or humic acids [27, 35]. Softwood kraft lignin [21, 26, 29-32] and soda lignin [22-25, 35] have been the major sources of material for these investigations while organosolv lignin [27, 28], or enzymatic hydrolysis lignin [27] were used in a few studies only. Beyond flocculants only sparse literature exists, showing that lignosulfonates modified by introduction of quaternary ammonium groups can improve the dispersion capacity of polycarboxylate ethers in clay-containing cement paste [36] or suggesting softwood kraft lignin polymerized with METAC as paper strength additive [37]. Complementing a comprehensive study investigating the impact of various reaction parameters on the properties of pine kraft lignin modified by EPTAC [26], the suitability of various lignin pre-activation and or formulation approaches have been also tested. This includes attempts to increase either the number of reactive sites for introduction of quaternary ammonium groups, such as by preceding phenolation [22] or charge density on the surface of micron-size particles prepared by Mannich-type reaction of organosolv lignin with formaldehyde and Girard T's reagent [28].

There is still no cationization process for hardwood kraft lignins that makes it soluble in water over the entire pH scale, which takes place in an aqueous medium, under mild reaction conditions and through low cost reagents, allowing to give Kraft lignins properties comparable to those that are characteristic of lignosulfonates.

### References

*1.* Duchesne, L.C. and D.W. Larson, Cellulose and the evolution of plant life: The physical and biological properties of cellulose have made it the most abundant molecule in the biosphere. BioScience, 1989. 39(4): p. 238-241*.*
*2.* Kim, C.-H., et al., Global trends and prospects of black liquor as bioenergy. Journal of Korea TAPPI, 2019. 51(5): p. 3-15*.*
*3.* Gao, W., J.P.W. Inwood, and P. Fatehi, Sulfonation of phenolated kraft lignin to produce water soluble products. Journal of Wood Chemistry and Technology, 2019. 39(4): p. 225-241*.*
*4.* Guo, Y., W. Gao, and P. Fatehi, Hydroxypropyl sulfonated kraft lignin as a coagulant for cationic dye. Industrial Crops and Products, 2018. 124: p. 273-283*.*
*5.* Ouyang, X., et al., Sulfonation of alkali lignin and its potential use in dispersant for cement. Journal of Dispersion Science and Technology, 2009. 30(1): p. 1-6.
*6.* Yasuda, S., et al., Ready chemical conversion of acid hydrolysis lignin into water-soluble lignosulfonate II: Hydroxymethylation and subsequent sulfonation of phenolized lignin model compounds. Journal of Wood Science, 1998. 44(2): p. 116-124*.*
7. Qin, Y., D. Yang, and X. Qiu, Hydroxypropyl sulfonated lignin as dye dispersant: Effect of average molecular weight. Acs Sustainable Chemistry & Engineering, 2015. 3(12): p. 3239-3244*.*
*8.* Rivière, G.N., et al., Agglomeration of viruses by cationic lignin particles for facilitated water purification. Acs Sustainable Chemistry & Engineering, 2020. 8(10): p. 4167-4177*.*
*9.* Richter, A.P., et al., Synthesis and characterization of biodegradable lignin nanoparticles with tunable surface properties. Langmuir, 2016. 32 (25): p. 6468-6477*.*
*10.* Biswas, S., et al., Nucleophilic cationization reagents. Tetrahedron Letters, 2010. 51(13): p. 1727-1729*.*
*11.* Bureš, F., Quaternary ammonium compounds: Simple in structure, complex in application. Topics in Current Chemistry, 2019. 377 (14) : p. 1-21*.*
*12.* Nachtergaele, W., The benefits of cationic starches for the paper industry. Starch, 1989. 41 (1) : p. 27-31*.*
*13.* Pei, A., et al., Surface quaternized cellulose nanofibrils with high water absorbency and adsorption capacity for anionic dyes. Soft Matter, 2013. _9 (6) : p. 2047-2055*.*
*14.* Littunen, K., et al., Synthesis of cationized nanofibrillated cellulose and its antimicrobial properties. European Polymer Journal, 2016. 75: p. 116-124.
*15.* Stepnova, E.A., et al., New approach to the quaternization of chitosan and its amphiphilic derivatives. European Polymer Journal, 2007. 43(6): p. 2414-2421*.*
*16.* Pillai, C.K.S., W. Paul, and C.P. Sharma, Chitin and chitosan polymers: Chemistry, solubility and fiber formation. Progress in Polymer Science, 2009. 34(7): p. 641-678*.*
*17.* Rabea, E.I., et al., Chitosan as antimicrobial agent: Applications and mode of action. Biomacromolecules, 2003. 4(6): p. 1457-1465*.*
*18.* Peng, Z.-X., et al., Adjustment of the antibacterial activity and biocompatibility of hydroxypropyltrimethyl ammonium chloride chitosan by varying the degree of substitution of quaternary ammonium. Carbohydrate Polymers, 2010. 81(2): p. 275-283*.*
*19.* Kotzé, A.F., et al., Effect of the degree of quaternization of N-trimethyl chitosan chloride on the permeability of intestinal epithelial cells (Caco-2). European Journal of Pharmaceutics and Biopharmaceutics, 1999. 47 (3) : p. 269-274*.*
*20.* Thanou, M., et al., Quaternized chitosan oligomers as novel gene delivery vectors in epithelial cell lines. Biomaterials, 2002. 23(1): p. 153-159*.*
*21.* Laszlo, J.A., Solubility and dye-binding properties of quaternized and peroxidase-polymerized kraft lignin. Environmental Technology, 1999. 20(6) : p. 607-615*.*
*22.* Li, Y., et al., Poly(vinyl alcohol)/quaternized lignin composite absorbent: Synthesis, characterization and application for nitrate adsorption. Journal of Applied Polymer Science, 2013. 128(5): p. 2746-2752*.*
*23.* Moor, A.M.M., et al., Preparation of quaternized lignin derived from oil palm empty fruit bunches and its flocculation properties. Journal of Wood Chemistry and Technology, 2019. 39(6): p. 399-420*.*
*24.* Yang, A.-l. and W.-j. Jiang, Studies on a cationically modified quaternary ammonium salt of lignin. Chemical Research in Chinese Universities, 2007. 23 (4) : p. 479-482*.*
*25.* Zhang, Q., et al., Flocculation performance of trimethyl quaternary ammonium salt of lignin-sodium alginate polyampholyte. BioResources, 2013. 8(3): p. 3544-3555*.*
*26.* Kong, F., et al., Preparation of cationic softwood kraft lignin and its application in dye removal. European Polymer Journal, 2015. 67: p. 335-345*.*
*27.* Wahlström, R., et al., Lignin cationization with glycidyltrimethylammonium chloride aiming at water purification applications. Industrial Crops and Products, 2017. 104: p. 188-194*.*
*28.* Wang, Z., et al., Preparation of quaternary amine-grafted organosolv lignin biosorbent and its application in the treatment of hexavalent chromium polluted water. International Journal of Biological Macromolecules, 2019. 126: p. 1014-1022*.*
*29.* Hasan, A. and P. Fatehi, Cationic kraft lignin-acrylamide as a flocculant for clay suspensions: (1) Molecular weight effect. Separation and Purification Technology, 2018. 207: p. 213-221*.*
*30.* Hasan, A. and P. Fatehi, Cationic kraft lignin-acrylamide copolymer as a flocculant for clay suspensions: (2) Charge density effect. Separation and Purification Technology, 2019. 210: p. 963-972*.*
*31.* Wang, S., et al., Novel process for generating cationic lignin based flocculant. Industrial & Engineering Chemistry Research, 2018. 57(19): p. 6595-6608*.*
*32.* Wang, S., et al., Cationic high molecular weight lignin polymer: A flocculant for the removal of anionic azo-dyes from simulated wastewater. Molecules, 2018. 23(8): p. 2005-2018*.*
*33.* Li, R., et al., Amine-crosslinked lignin-based polymer: Modification, characterization, and flocculating performance in humic acid coagulation. Acs Sustainable Chemistry & Engineering, 2015. 3(12) : p. 3253-3261 *.*
*34.* Guo, K., et al., Characterization and performance of a novel lignin-based flocculant for the treatment of dye wastewater. International Biodeterioration & Biodegradation, 2018. 133: p. 99-107*.*
*35.* Li, G., et al., Preparing cationic cellulose derivative in NaOH/Urea aqueous solution and its performance as filler modifier. BioResources, 2015. 10(4) : p. 7782-7794*.*
*36.* Zheng, T., et al., Synthesis of quaternized lignin and its clay-tolerance properties in montmorillonite-containing cement paste. Acs Sustainable Chemistry & Engineering, 2017. 5(9): p. 7743-7750*.*
*37.* Liu, Z., et al., Preparation and characterization of softwood kraft lignin copolymers as a paper strength additive. Polymers, 2018. 10(7): p. 1-12*.*

### SUMMARY OF THE INVENTION

The present invention is directed to a chemical process for grafting cationic moieties onto kraft lignins for producing lignins soluble across the entire pH scale and at solute concentrations of up to 800 g·L⁻¹ comprising the following steps:
a) extracting lignin from black liquor as obtained during industrial pulping of a hardwood wood using the Kraft process;
b) reacting the lignin obtained in step a) with quaternary ammonium compounds in aqueous alkaline medium;
c) neutralizing the reaction medium to obtain a solution of the cationic lignin.

A second aspect of the present invention is a cationic kraft lignin water-soluble across the entire pH scale obtained by the process described.

Another aspect of the present invention is the use of the cationic kraft lignin for antioxidant activity, for removing dyes, for modifying cellulosic pulp to produce paper products, for modifying the surface of paper products and for plasticizing concrete formulations.

### BRIEF DESCRIPTION OF THE DRAWINGS

Figure 1. Lignin derivatization with CHPTAC (A) proceeding via the formation of EPTAC (B) in aqueous alkaline medium. Product (C) formation occurs under extreme alkalinity conditions.
Figure 2. Effects of process parameter variation: (a) CHPTAC-to-lignin molar ratio (0.4 to 3.8 mol mol-1); (b) reaction time (1, 2, 3, and 4 h); (c) temperature (25 °C, 70 °C); (d) lignin concentration (10 wt.%, 20 wt.%) on the degree of substitution of free lignin phenolic groups by quaternary ammonium moieties. ■-reaction conditions: 3h, 70 °C, 10 m/m % lignin; 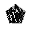 -ratio CHPTAC/ lignin: 1,3; ▲- ratio CHPTAC/ lignin: 2,6; ◆- ratio CHPTAC/ lignin: 3,8.
Figure 3. FT-IR spectra of Eucalyptus globulus kraft lignin and its cationic derivative (sample QL-5, below line). Full spectrum (a) and zoom of the wavenumber range of 800-1800 cm-1 (b).
Figure 4. 1H NMR spectra of cationized Eucalyptus globulus kraft lignin (QL-5), CHPTAC, EPTAC and three samples of CHPTAC in D2O at pH 12-13 and different temperature (RT, 50°C, 70°C) for different periods of time (2 h, 10 h) prior to NMR analysis.
Figure 5. Quantitative 13C NMR spectrum of QL-5 with peak assignment, below spectrum (the inset shows the peak area between δ = 140-160 ppm of the parent lignin, upper spectrum).
Figure 6. X-ray photoelectron survey spectrum of the cationic lignin QL-5.
Figure 7. Thermostability (TG, DTG) of Eucalyptus globulus kraft lignin prior and its cationic derivative (QL-5) in oxygen (a) and nitrogen atmosphere (b). CD-Eucalyptus kraft lignin TG; ②- QL-5 TG; ③- Eucalyptus kraft lignin DTG; ④- QL-5 DTG.
Figure 8. Gravimetry of water vapor adsorption of selected samples (■, QL-2;•, QL-5 e ▲, QL-7) exposed to two humidities: (a) 35% RH; (b) 78% RH.
Figure 9. (a) Antioxidant activity measured by the FRAP method and (b) application of selected lignins as a flocculant(■, QL-2;•, QL-5; ▲,QL-7; ▼, QL-12).

### DETAILED DESCRIPTION OF THE INVENTION

The present invention is directed to a chemical process for grafting cationic moieties onto kraft lignins for producing lignins soluble across the entire pH scale and at solute concentrations of up to 800 g·L⁻¹.

In a preferred embodiment of the invention, step a) further comprises a purification step.

In a preferred embodiment of the invention, step c) further comprises a purification or concentration adjustment step.

In a preferred embodiment of the invention, in step b) the quaternary ammonium compound comprises a reactive site connected to the quaternary ammonium group via a spacer group of alkyl, alkenyl, or aryl, including mixed nature.

In a preferred embodiment of the invention, in step b) the quaternary ammonium compound comprises a terminal trialkylammonium group.

In a preferred embodiment of the invention, in step b) the quaternary ammonium compound is 3-chloro-2-hydroxypropyl-trimethylammonium chloride.

In a preferred embodiment of the invention, in step b) the 3-chloro-2-hydroxypropyl-trimethylammonium chloride reacts at a temperature of 25°C to 70°C,; a lignin-to-(3-chloro-2-hydroxy)-propyl-trimethylammonium chloride ratio of 0.4 to 4.0, and at a reaction time of up to 24 hours.

In a preferred embodiment of the invention, in step a) the wood is a eucalyptus wood.

In a preferred embodiment of the invention, the cationic kraft lignin water-soluble across the entire pH scale obtained by the process described comprises a degree of substitution of at least 0,3.

In a preferred embodiment of the invention, the cationic kraft lignin water-soluble across the entire pH scale obtained by the process described comprises a degree of substitution between 0,3 and 1,7.

### Preparation of cationic kraft lignin

Kraft lignin from Eucalyptus globulus obtained from black liquor from a paper mill through the application of the LignoBoost process was used as a substrate.

Its reaction was carried out with 3-Chloro-2-hydroxypropyl-trimethylammonium chloride (CHPTAC) in an alkaline aqueous medium and under different reaction conditions (temperature, time, initial lignin concentration, molar ratio of CHPTAC to lignin), as described in Table 1, for the production of highly water-soluble cationic products over a wide pH range.

Aiming to exclude the interference of by-products and working with a well-defined lignin separated and purified by cutting-edge technologies, black liquor from a kraft mill was subjected to a pilot-scale LignoBoost process. Besides the impact of different reaction conditions on the degree of substitution and solubility, selected products were subjected to instrumental analysis, such as size exclusion chromatography (SEC), nuclear magnetic resonance spectroscopy (1H, 13C), X-ray photoelectron spectroscopy (XPS), Fourier transform infrared (FT-IR) spectroscopy, thermogravimetric analysis (TGA, DTG), hygroscopicity and antioxidant activity.

Eucalyptus globulus kraft lignin obtained from black liquor by applying the LignoBoost process was used as substrate for all experiments of this study. As targeted by selection of this isolation and purification procedure, the parent lignin was low in ash content (1.42 wt.%). According to elemental and functional group analyses [41], the source lignin had low nitrogen (0.20 wt.%) and sugar contents (1.38 wt.%), while the mass fractions of phenolic (3.93 mmol g-1) and aliphatic hydroxyl groups (3.03 mmol g-1) as well as the ratio of syringyl-to-guaiacyl moieties (3.74) were in the typical range of hardwood lignins [42] . Based on all analytical data, a C9 formula of C9H6.76O2.95S0.18(OCH3)1.41(OHphen)0.83(OHaliph)0.64 was calculated, equivalent to a C9 molecular mass of 211.4 g mol⁻¹.

The results revealed that a C/L ratio of at least one is required to afford products completely soluble in water. Solubility was found to be independent on pH as exemplarily demonstrated for sample QL-5, a concentration of up to 450 g L-1 and the pH levels of 2, 7 and 12. The solubility is in fact higher, however, this has been only shown for pH 7 and one higher concentration level (780 g L-1, QL-5).

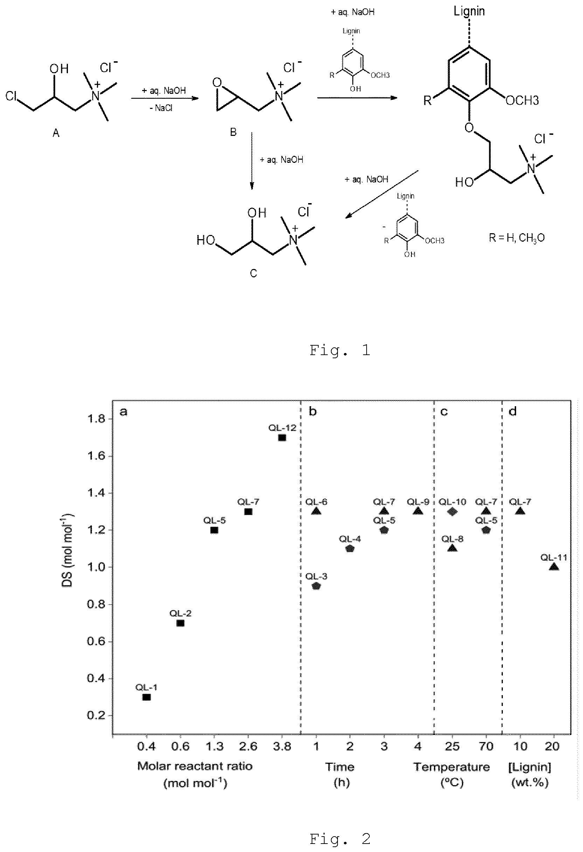

Nitrogen content analysis of the products confirmed that the degree of substitution (cf. formula 1) increases almost linearly for the lower range of tested C/L molar ratio (0.4, 0.6 and 1.3). At higher ratios, the increase in DS is less pronounced as evident when raising the C/L ratio from 1.3 to 2.6. The somewhat higher DS of 1.7 obtained at CHPTAC to lignin ratio of 3.8 might be a result of the stronger alkaline conditions employed (3 M instead of 1M aqueous NaOH, cf. Table 1; Figure 2, section a).

Extending the reaction time (70°C) had a positive effect only for the CHPTAC-to-lignin ratio of 1.3. Doubling the time from 1 to 2 hours resulted here in a 0.5 wt.% gain in nitrogen contents. Further prolonging reaction time to three hours had a smaller impact only (0.2 wt.% gain) and it seems that this effect levels off beyond that time. At a molar C/L ratio of 2.6, the highest attainable degree of substitution (DS 1.3) is reached already after one hour of reaction time and no further increase was observed when conducting the experiments for longer periods of time (Figure 2, section b).

Elevated temperature accelerates the introduction of quaternary ammonium moieties as exemplarily demonstrated for a C/L ratio of 2.6. While at room temperature 24 hours of re-action time were required to introduce 4.5 wt.% of nitrogen (DS 1.3), the same degree of substitution can be reached at 70°C already after 4 hours (Figure 2, section c).

It was observed a significant drop of the nitrogen contents (4.6 to 3.8) when increasing the mass concentration of educts from 10 to 20 wt.% (Figure 2, section d).

It has been shown that at pH 13, 10% lignin, 70°C and 3 h reaction time, a minimum CHPTAC to lignin molar ratio of 1.3 is required to obtain fully water-soluble products.

Elemental analysis (4.2% N), size exclusion chromatography (MW 2180 Da) and 13C NMR spectroscopy of the product obtained, under the conditions mentioned above, suggest the introduction of 1.2 quaternary ammonium groups per phenylpropane unit of the lignin, and the substitution than 75% of the phenolic groups initially available.

**Table 1: Impact of various reaction parameters on the attainable degree of substitution as determined by nitrogen elemental analysis.**

| Sampl e Code | Molar reactant ratio | Concentration | | Reactio n time | Temperatu re | Nitrogen content | Degree of substitut ion |
|---|---|---|---|---|---|---|---|
| | CHPTAC / Lignin | Ligni n | NaOH | | | | |
| | | [wt. % ] | mol L⁻¹ | [h] | [°C] | [wt.%] | [mol mol⁻¹] |
| QL-1 | 0.4 | 10 | 1 | 3 | 70 | 1.6 | 0.3 |
| QL-2 | 0.6 | 10 | 1 | 3 | 70 | 3.2 | 0.7 |
| QL-3 | 1.3 | 10 | 1 | 1 | 70 | 3.5 | 0.9 |
| QL-4 | 1.3 | 10 | 1 | 2 | 70 | 4.0 | 1.1 |
| QL-5 | 1.3 | 10 | 1 | 3 | 70 | 4.2 | 1.2 |
| QL-6 | 2.6 | 10 | 2 | 1 | 70 | 4.5 | 1.3 |
| QL-7 | 2.6 | 10 | 2 | 3 | 70 | 4.4 | 1.3 |
| QL-8 | 2.6 | 10 | 2 | 3 | 25 | 4.1 | 1.1 |
| QL-9 | 2.6 | 10 | 2 | 4 | 70 | 4.5 | 1.3 |
| QL-10 | 2.6 | 10 | 2 | 24 | 25 | 4.5 | 1.3 |
| QL-11 | 2.6 | 20 | 2 | 3 | 70 | 3.8 | 1.0 |
| QL-12 | 3.8 | 10 | 3 | 3 | 70 | 5.1 | 1.7 |

Size exclusion chromatography confirmed that both weight (Mw) and number average (Mn) molecular weight of the products increased with the C/L ratio used and, hence, with the ex-tent of cationization. While the parent lignin had an Mw of 1415 Da and Mn of 1295 Da [41], both values increased in the order QL-5 (C/L=1.3, Mw 2180 Da, Mn 1760 Da) < QL-7 (C/L=2.6, Mw 2350 Da, Mn 1890 Da) < QL-12 (C/L=3.8, Mw 2380 Da, Mn 1920 Da).

This observed gain in weight average molecular mass corresponds approximately to an incorporation of 5.0 (QL-5) to 6.3 (QL-12) quaternary ammonium moieties (Mw 152.5 Da) per lignin molecule, which would be equivalent to a DS of 0.75-0.95. This range of substitution fits well the count of free phenolic groups of 0.83 per C9 unit in the parent lignin. It is evident that aliphatic hydroxyl groups are engaged in derivatization only at an excess of CHPTAC and at significantly lower reaction rate. A comparison of the DS values calculated from the results of SEC with that derived from elemental (nitrogen) analysis (DS 1.2-1.7) suggests the presence of higher-molecular nitrogen-containing by-products even after dialysis (cut-off 2000 Da). This is evident from the total hydroxyl group content, which is equivalent to 1.47 per C9 unit only (0.83 phenolic and 0.64 aliphatic OH groups). Ring-opening oligomerization of EPTAC in particular under the stronger alkaline conditions of QL-12 syn-thesis could be one of the possible side reactions. Underestimation of DS by SEC is another likely reason for this discrepancy, which might be due to the relatively low molecular weight of the samples being close to the detection limit or the possible chemical interaction of the charged molecules with the stationary phase. Another plausible source of the imbalance observed between evaluation of DS by elemental analysis (DS 1.2-1.7) and that based on the number of reactive phenolic groups available (0.83 per C9) could be the formation of quaternary ammonium structures through a quinone methide mechanism [43]. The latter could occur between benzyl-type lignin structures and the glycol derivative C of CHPTAC (Figure 1).

Irrespective of which DS values are regarded, either calculated from the nitrogen contents or derived from SEC data, in both cases they are significantly higher than the values previously reported by Noor et al. [23] and Kong et al. [26] for similar materials. Cationization of lignin from empty oil palm fruit bunches for example, conducted at significantly higher molar C/L ratios of 5, 10 and 15 but otherwise similar conditions (24 h stirring at room temperature, 5 wt.% lignin content in 0.2 M NaOH) afforded DS values of 0.20-0.30 only [23]. Similarly, softwood kraft lignin purified according to the LignoForce technology and reacted with EPTAC at a molar reagent-to-lignin ratio of 2 (70°C, 1 wt.% lignin content, 1h) afforded a DS of 0.24. However, higher DS values of 0.74 were reported for hardwood organosolv lignin modified in 10 wt.% solution (60°C, 20 h) using twice the stoichiometric amount of EPTAC [27].

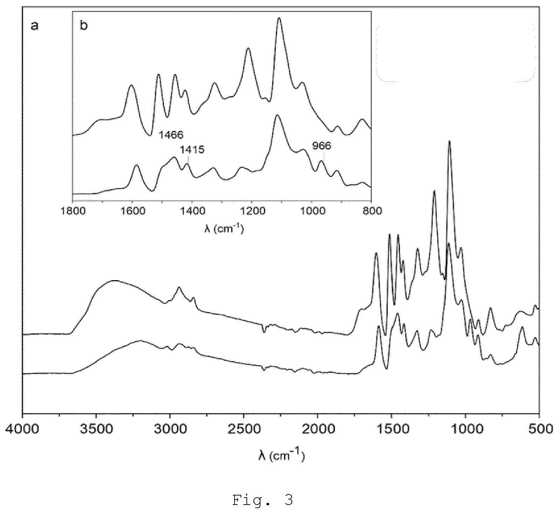

The introduction of the quaternary ammonium moieties has been confirmed by FT-IR spectroscopy (Figure 3). Different from the parent lignin, the modified lignin exemplarily studied (QL-5) shows a clearly reduced intensity of the broad band centered at 3420 cm⁻¹. This is due to the reduced extent of O-H stretching vibrations in hydroxyl groups [44] as caused by the substitution reaction. The bands at 1466 and 966 cm⁻¹ (methyl and methylene groups attached to the quaternary ammonium atoms) and 1415 cm⁻¹ (C-N stretching vibrations) which are only present in the modified lignin are further indicators of a successful modification [23, 26, 35, 45-47]. The wavenumbers of other peaks existent in the spectrum of the cationic lignin are in agreement with the typical vibration band pattern of lignins and respective literature data: 2938 cm-1 and 2840 cm-1 (stretching vibration of methyl and methylene groups [48]); 1603 cm-1 (aromatic skeletal vibration [45]); 1425 cm-1 (aromatic skeletal vibration) [45]; 1328 cm-1 (syringyl unit vibration [49]); 1116 cm-1 (in-plane deformation vibration of C-H in syringyl moieties [45]); 1033 cm-1 (aromatic C-H in-plane deformation and C-O deformation in primary alcohols [45, 49]); 835 cm-1 (C-H out-of-plane deformation in positions 2 and 6 of syringyl groups [50]).

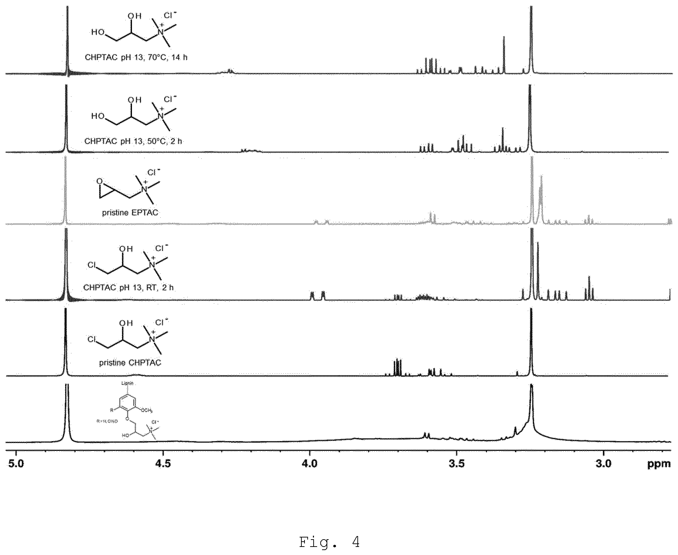

¹H NMR spectroscopy as exemplarily applied to sample QL-5 provided further evidence of a successful introduction of 2-hydroxy-3-(trimethylammonium) propyl moieties (Figure 4). Based on literature data and 1H NMR spectra of both reagent CHPTAC and intermediary formed EPTAC (compounds A and B in Figure 1), the intense singlet at 3.24 ppm can be unambiguously assigned to the quaternary ammonium moieties introduced, more specifically the three methyl groups attached to each of the quaternary nitrogen atoms [23, 26, 35, 47]. Covalent attachment to the polymeric structure of lignin is also evident from the fact that the product investigated had been subjected to exhaustive dialysis using a 2000 Da cut-off membrane, which should largely exclude low molecular compounds like CHPTAC and EPTAC from the product investigated by 1H NMR spectroscopy (for the full spectrum of QL-5 see Figure S2; cf. supplementary information). Motivated by the above discussed discrepancy between nitrogen contents determined by elemental analysis and the presence of some signals (e.g., 3.60 and 3.61 ppm) supposedly not contributed to the 1H NMR spectrum by lignin, we decided to look somewhat more closely into the changes in the 1H NMR spectrum of pristine CHPTAC under the alkaline conditions of lignin modification and a maximum temperature of 70°C (Figure 4). A comparison with the spectrum of pristine EPTAC confirms that the conversion of CHPTAC into EPTAC starts already at room temperature, since the prominent signals of the non-substituted oxirane methylene group of EPTAC (ca. 3.9 and 4.0 ppm) are already clearly visible after 2 h of reaction time.

O tratamento da CHPTAC para o mesmo periodo, mas a 50°C permite a conversão total da EPTAC no derivado de etilenoglicol C (Figura 1), que é conhecido por ser o principal produto da hidrólise de CHPTAC. Contudo, é evidente que outros produtos também podem ser formados quando a temperatura é aumentada para 70°C e o tempo é alargado para 14 h. Embora haja provas no espectro de RMN de 1H, de que o CHPTAC não forma compostos poliméricos sob as condições testadas, não se pode excluir que a reação com lenhina possa ocorrer, levando ao aumento do teor de azoto e explicando a sua presença, na amostra QL-5 e prevalência ap6s a diálise.

Quantitative 13C NMR spectroscopy as exemplarily conducted for sample QL-5 also con-firmed the introduction of quaternary ammonium moieties. This can be concluded from the change of the peak pattern in the fingerprint range of 145-155 ppm where several prominent resonance signals of aromatic carbons can be found [51]: This includes C3 atoms in non-etherified guaiacyl units (centered at 145.9 ppm; [52]) as well as C3/C5 atoms in non-etherified (centered at 149.5 ppm; [52]) and etherified syringyl units (centered at 152.5 ppm; [53]). In view of the prevalence of syringyl units present in the parent lignin (cf. above), only changes in the peak pattern caused by conversion of S units with free phenolic groups into their etherified counterparts shall be discussed here. In the parent lignin, the integral of the peak assigned to C3/5 carbons in non-etherified S units and overlapped by C3 in G units is more than three times higher than that of the C3/5 atoms in etherified S moieties (150.3-153.0 ppm; [43, 53]).

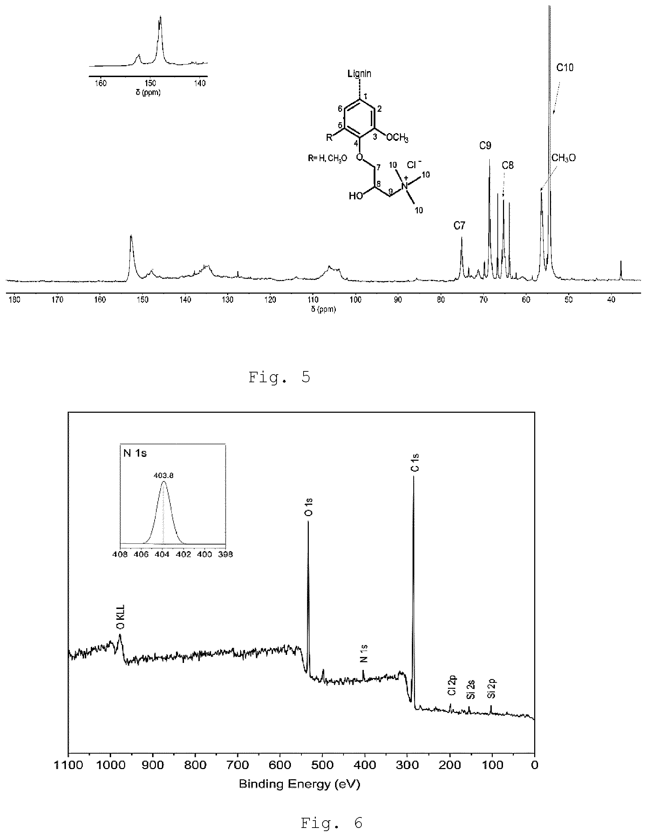

After etherification of free phenolic groups through reaction with the intermediary EPTAC (cf. Figure 1), this ratio is clearly reversed and the signal at 152.5 ppm is now dominant. Based on integral ratio a rough estimate suggests that at least 70-80% of free phenolic groups have reacted with EPTAC. Even though this value is likely to be even higher, the interference of carbon signals in non-etherified S and G units by peaks of C3 (149.4 ppm) and C4 atoms (147.5 ppm) in etherified G units does not allow for a more precise calculation. Successful modification of lignin is also concluded from the appearance of a prominent signal at 54.6 ppm, which was only found in QL-5 and was therefore - in good agreement with literature data - assigned to the methyl carbons attached to the quaternary nitrogen atoms [35, 46, 47]. All carbons of the propyl spacer between phenoxy and quaternary ammonium group could be also assigned in good agreement with other biopolymers modified by CHPTAC or EPTAC (cf. Figure 5). The quantification of methylol groups in β-O-4 structures at 59.0-61.0 ppm [54] did not reveal significant differences between the parent kraft lignin and QL-5. This indicates that the primary hydroxyl groups did not react with CHPTAC under the applied reaction conditions. On the other hand, a weak resonance signal at 79.5 ppm was found in the spectrum of QL-5 which was absent in the parent kraft lignin. This resonance is commonly assigned to benzylic carbon in benzyl ether structures [57] and supports the assumption that benzylic hydroxyl groups could have been involved in lignin quaternization via a quinone methide mechanism. However, the contribution of phenolic moieties in the cationization reaction is predominant, because the estimated amounts of newly formed -O-alkyl bonds did not exceed of 0.07 per one aromatic ring.

X-ray photoelectron spectroscopy (XPS) as exemplarily conducted for QL-5 as the most interesting sample from the economic point of view (full solubility at lowest degree of substitution) confirmed the successful introduction of quaternary ammonium moieties (Figure 6). This is evident from the binding energy of the N1s peak centered at about 403.8 eV which has been assigned according to literature [54-56]. Even though low-molecular quaternary ammonium compounds are known to have EB values of around 402 eV, it has been shown at the example of quaternary ammonium polysulfones that crosslinking of respective linear polymers can cause the N1s peak to shift towards higher binding energies, in that specific case almost to 403 eV [54]. Similarly high values have been reported for pine bark chemically equipped with quaternary ammonium moieties [55]. The relatively broad full width at half maximum (FWHM) is probably caused by the different chemical environments of the introduced quaternary ammonium groups within the irregular lignin network structure. How-ever, also the presence of smaller quantities of 3-(trimethylammonium)-1,2-propylenglycol oligomers formed by ring-opening reaction of EPTAC in strongly alkaline conditions cannot be fully excluded, since the N1s binding energy would be very similar to the modified lignin.

There is no indication of the presence of amine moieties which is evident from the absence of N1s peaks in the range of 398 - 400 eV [57]. Amines could have formed at elevated temperature at the strong alkaline conditions used, however this was not very likely to occur in aqueous medium and at relatively low temperature (70°C) . The overview and Cl2p spectra also confirm the presence of an adequate quantity of chloride ions (EB = 198.7 eV) and of some silicon, most likely introduced by alkali-aided solubilization from the used glassware.

Zeta potential measurements confirmed that electrostatic repulsion of the positively charged lignin molecules and, hence, colloidal stability of respective solutions depend on the molar C/L ratio used for synthesis and, hence, on the attained degree of substitution (DS = 0.7, 1.2, 1.3 and 1.7). It was found that for the samples examined, the zeta potential increases in the order QL-2 (+12.9 ± 0.5 mV) < QL-5 (+22.4 ± 1.5 mV) < QL-7 (+24.0 ± 1.4 mV) < QL-12 (+30.3 ± 2.6 mV). This is also confirmed by surface charge calculation based on polyelectrolyte titration according to [26, 40]. The equivalent charge concentration (peq L-1) increased in the same order QL-2 (202 ± 2) < QL-5 (494 ± 5) < QL-7 (566 ± 16) < QL-12 (697 ± 4).

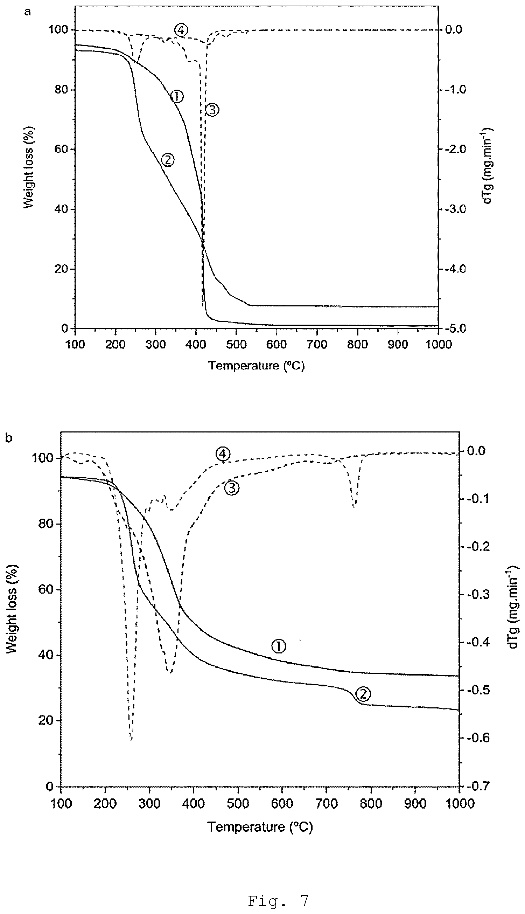

Thermogravimetric analysis conducted in both oxygen and nitrogen atmosphere (Figure 7) revealed a higher thermo-sensitivity for the cationic lignin compared to the parent material. Degradation in oxidative environment is naturally more severe than in inert atmosphere. While under nitrogen protection only 50 wt.% of QL-5 has been volatilized at 400°C, virtually quantitative gasification has occurred in the presence of oxygen. This is similar for the parent lignin and comparable with the technical process of wood gasification [58]. In the absence of oxygen, four prominent temperature events can be distinguished for both of the materials. While the release of adsorbed water till somewhat beyond 100°C was largely similar, a significant shift of the main degradation event (corresponding to 34% mass loss) towards lower temperature (350°C □ 260°C) was obtained for the cationic product which is in agreement with the literature [59]. This is presumably due to the well-known thermal degradation of quaternary ammonium salts to afford tertiary amines and - in the case of the presence of a proton in -position relative to the ammonium nitrogen - an alkene by an E2 Hofmann elimination mechanism [60]. Degradation between 300°C and 380°C accounts for about 24% weight loss. This event is presumably unaffected by quaternary ammonium moieties, since the same signal was found for the non-modified parent lignin. Considering the much higher intensity of this signal for the parent lignin, it might be concluded that free phenolic groups play a key role here. Interestingly, there is another prominent event at about 770°C that was observed for the cationic lignin only. It is therefore assumed that heteroaromatic structures are formed here undergoing subsequent condensation and aromatization under depletion of nitrogen as is known to take place in carbonisation of poly(1-acrylonitrile) fibres in the temperature range of 600-1300°C.

### Hygroscopicity and water adsorption

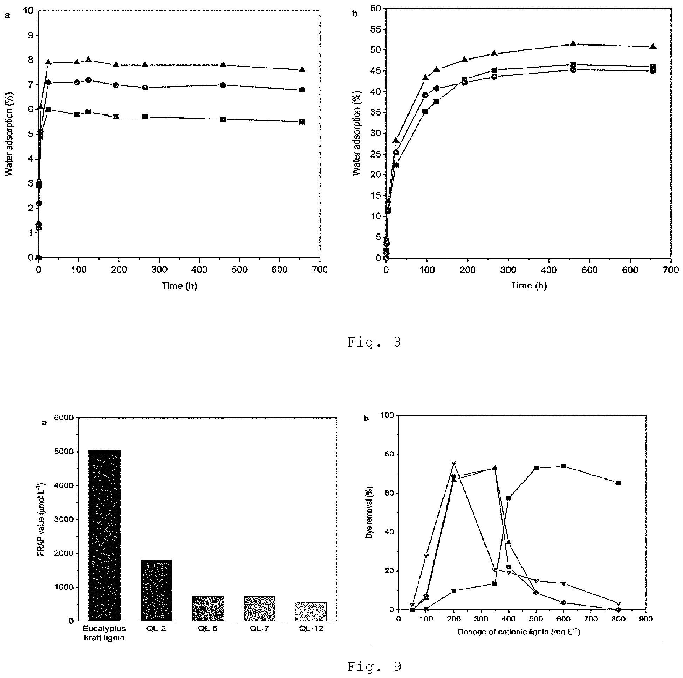

Many quaternary ammonium salts are hygroscopic and can adsorb considerable amounts of water when stored in humid environment. Therefore, moisture sorption was exemplarily studied for selected samples (QL-2, QL-5, QL-7) and two levels of relative humidity, i.e. ca. 35% and 78% RH (Figure 8). The results confirm the above assumption with regard to hygroscopicity and show that water uptake occurs quickly in both adsorption scenarios and for all materials tested. The highest adsorption capacity was found for the sample with the highest degree of substitution tested, i.e. sample QL-7 (DS 1.3) . Equilibrium water content was here 8 wt.% (ca. 35% RH) and 50 wt.% (ca. 78% RH) while it was somewhat lower for the material of DS 0.7 (35% RH: 6 wt.%; 78% RH: 45 wt.%). At the example of 78% RH it is evident that initial adsorption is relatively fast but slows down with increasing water-uptake until equilibrium moisture content is reached after about 11 days (DS 0.7 and 1.2) and 19 days (DS 1.3), respectively. This suggests that modification and coating of material surfaces with cationic lignin can not only impart enhanced polarity to hydrophobic surfaces but might also play a beneficial role in the formation of biofilms and improved biodegradation of otherwise poorly degradable materials.

### Antioxidant activity

The successful introduction of (2-hydroxy-3-trimethylammonium)-propyl moieties has been indirectly also confirmed by the conducted FRAP (ferric ion reducing antioxidant power) antioxidant capacity assay. Polyphenols can easily transfer electrons to other substrates since they are able to delocalize, dissipate and stabilize unpaired electrons across their conjugated □ electron systems, which can eventually result in a stable oxidized state. If their "free" phenolic hydroxyl groups are once lost, such as by etherification, phenols also lose their reductive capabilities. This is confirmed by the decrease in antioxidant activity (ex-pressed as FRAP value) which increased with the severity of substitution by (2-hydroxy-3-trimethylammonium)-propyl groups. According to the residual antioxidant activity of sample QL-5, about 86% of phenolic groups have been converted into the respective ether derivative (cf. Figure 9, section a). This is equivalent to 0.71 phenolic groups per C9 unit and is, hence, in good agreement with the C9 phenolic group contents calculated from the SEC results (0.75). With regard to potential applications, it is worth noting that even at high degrees of substitution a residual antioxidant activity of some 10% exists which could be even higher at lower degrees of substitution (Figure 9a).

### Dye removal

The potential use of the synthesized cationic lignins as flocculation agents was tested using the anionic vinylsulfone dye Remazol Brilliant Blue R (Reactive Blue 19). The choice was based on practical considerations, as this anthraquinone derivative is used for large-scale dyeing of cotton and wool and is, hence, a major contaminant in effluents of the textile industry [61, 62]. The flocculation experiments conducted for cationic lignins of different degree of substitution (QL-2, QL-5, QL-7 and QL-12) and using concentration series of in-creasing lignin-to-dye ratio (pH 7, 30°C) confirm that the efficiency of dye removal from solution state increases with the extent of lignin cationization. This is evident from the data compiled in Figure 9b which show that for sample QL-12 (DS 1.7) up to 78% of dye (CDye= 90 mg L-1) can be precipitated already at relatively low lignin concentration (200 mg L-1). A similarly high value is reached for the samples QL-5 (DS 1.2) and QL-7 (DS 1.3) at a lignin concentration of 350 mg L-1 only. Flocculation efficiency decreases significantly at low DS and dye concentration as suggested by the results of sample QL-2 (DS 0.7) where high dosages of 500 mg L-1 were required to precipitate about 55% of dye from a respective solution of lower concentration (75 mg L-1). It is worth noting that for each of the cationic lignins tested an optimum dosage for maximum dye removal was identified. Beyond that optimum value, flocculation activity declines distinctly due to overcharging and re-stabilization of dye particles which is in agreement with the literature [26, 32, 34, 63].

### Bulk modification of paper to replace cationic starch

Cationic starch is used on large scale for wet-end bulk modification of paper. Physical inter-action between negative fiber surface and cationic groups of the starch molecules result in improvement of mechanical strength, better retention of fines and fillers, faster drainage, and reduction of waste water pollution. Since cationic starch in bulk paper modification is a food competitor, (partial) substitution by cationic lignin, probably also in less pure form than studied here, would be an economically attractive approach, in particular since as has shown that the products obtained share similar properties.

Example 1: In a typical formulation used for bulk modification of paper, 10 kg of cationic starch were added to 1 ton of bleached eucalyptus pulp. Substitution of 10% of cationic starch by cationic lignin (DS 0.7, 1 kg per ton of pulp) afforded hand sheets that featured 18% higher burst index (ISO 2758; 6.6 vs. 5.6 kPa m2 g-1) and 5% higher tear index (ISO 1974; 10.1 vs. 9.6 mN m2 g-1) compared to materials containing bleached eucalyptus pulp only.

The same formulation (DS 0.7, 1 kg cationic lignin, 9 kg cationic starch per ton of pulp) resulted in a burst index (6.6 kPa m2 g-1) similar to that of the reference material (6.5 kPa m2 g-1; 10 kg cationic starch per ton of pulp) while the tear index was even 5% higher (10.1 mN m² g⁻¹ vs. 9.6 mN m² g⁻¹).

Example 2: In the standard formulation of example 1, 50% of cationic starch (5 kg per ton of pulp) were replaced by the same amount of cationic lignin (DS = 0.7). Mechanical characterization in terms of burst, tear (methods see example 1), and tensile index (ISO 1924-2) revealed that the substitution tested did not entail significant losses in mechanical paper performance. Compared to the reference material (10 kg cationic starch per ton of pulp) burst, tear, and tensile index variation was 4%, 3%, and 1% lower. Advantageously, the formulation with 5 kg ton-1 cationic lignin (DS = 0.7) and 5 kg ton-1 cationic starch featured a somewhat higher hydrophobicity of 17% in terms of water contact angle (72.6°) compared to the lignin-free reference (61.9°).

Example 3: In the standard formulation of example 1, 50% of cationic starch were replaced by cationic lignin (DS 0.7). Burst (-4%), tear (+1%), and tensile index (+3%; methods see example #1 and #2) confirmed that 50% of cationic food starch can be safely replaced by cationic kraft lignin without compromising the mechanical properties compared to the reference paper prepared using cationic starch exclusively (10 kg cationic starch per ton of pulp).

Example 4: In the standard formulation of example 1, 50% of cationic starch were replaced by cationic lignin of higher degree of substitution (DS 1.2). Burst (-4%), tear (-7%), and ten-sile indexes (-1%) (for methods see examples 1 and 2) confirmed that 50% of cationic starch can be safely replaced by cationic kraft lignin without compromising the mechanical properties of the prepared paper compared to the reference material (10 kg cationic starch per ton of pulp). This formulation can be used to increase hydrophobicity of the paper by 32% (water contact angle 81.5°) compared to the reference paper prepared using cationic starch only as additive (10 kg per ton of pulp; contact angle 61.9°).

Example 5: All formulations tested to replace a certain fraction of cationic starch by cationic lignin showed no reduction of drainability as deduced from air resistance measurements: The formulation with 5 kg ton-1 cationic lignin (DS 1.2) and 5 kg ton-1 cationic starch gave similar value of air resistance compared to the reference material prepared from 10 kg cationic starch per ton of pulp (13.5 s 100mL-1 vs. 13.6 s 100mL-1; Gurley method; ISO 5636-5). It was similar for a formulation containing 3 kg ton-1 cationic lignin (DS = 0.7) and 7 kg ton-1 cationic starch (12.7 s 100mL-1 vs. 13.6 s 100mL-1).

### Surface modification of paper

Surface modification by sizing agents is a common technique to improve the printability of paper. It is frequently accomplished by rather non-polar compounds, usually having functionalities which allow for covalent bonding onto the paper surface. Alkyl ketene dimer (AKD) type compounds are quite common in this regard. Due to its amphiphilic properties it is reasonable to expect, that the application of cationic lignins of moderate to low degree of substitution can be used to increase the hydrophobicity of modified paper surfaces. In-creased hydrophobicity is also supposed to delay moisture sorption, biofilm formation and microbial degradation. This is even more the case since cationic eucalyptus kraft lignin has been shown to feature antimicrobial properties.

Example 1: Hand sheets prepared from unbleached Eucalyptus globulus pulp without any surface treatment were surface coated (Mathis BA-RRC reverse roll coater) with a pickup of 4.8 g m-2 using an aqueous solution of 15% cationic lignin (DS 1.2) and 85% temperature-activated enzymatically modified maize starch. The obtained paper demonstrated a 22% increase of tensile index (78.6 kN m kg⁻¹) compared with uncoated hand sheets (64.4 kN m kg⁻¹). Additionally, samples coated with the aforementioned formulation featured the same tensile strength (11.9 kN m⁻¹) like samples coated with 100% starch (11.6 kN m⁻¹).

Example 2: Partial replacement of starch by 15% or 30% of cationic lignin (DS 1.2) were found to have no negative impact on burst index of the prepared coated hand sheets which was 5.8 kPa m2 g-1 no matter if starch only or up to 30% cationic lignin was used in the coating formulation. Although, a slight decrease in burst index was determined for formulations containing 50% starch and 50% cationic lignin, the burst index (5.3 kPa m2 g-1), is still higher by at least 20° compared to uncoated hand sheets (4.4 kPa m² g⁻¹).

Example 3: Formulations with 50% cationic lignin (DS 1.2) and 50% thermo-activated enzymatically modified starch afforded a 17% increase of water resistance as determined by water contact angle measurements (θ = 103°) compared to uncoated hand sheets (θcontrol=88°).

### Incorporation of the water-soluble cationic lignins into any polymer or polymer pre-cursor formulation using water or polar solvents for solubilization and subsequent casting

Due to its specific macromolecular composition consisting of interlinked araliphatic moieties (with partially extended conjugated π electron systems), lignins feature considerable UV light adsorption capabilities. Homogeneous incorporation of water-soluble cationic lignins into hydrogels, emulsions, creams, compounding with water-soluble polymers or copolymerization with appropriate precursor compounds is believed to open new opportunities for a wide range of biobased, environmental-friendly products targeting UV light protection.

Example 1: An aliquot (20 mL) of an aqueous solution of hot water-soluble dialdehyde cellulose (10 wt.%, DO 92% related to AGU) is mixed with 2 mL of an aqueous 1 wt.% solution of cationic lignin (DO 1.2). Solution casting, drying and hot pressing affords flexible, transparent and mechanically (ca. 100 MPa tensile strength) strong films with good oxygen barrier and UV protection properties.

Example 2: An aliquot of 1 mL of an aqueous 1 wt.% solution of cationic lignin (DO 1.2) is mixed with 10 mL aqueous solution of polyvinylpyrrolidone. After solution casting and cross-linking in alkaline conditions, a clear, transparent and flexible film is obtained that has UV absorption properties.

### Plasticizer for concrete formulations

Lignosulfonates are used as plasticizers and water reducing agents in the mortar and concrete business already since the 1930s. Mixed with cement, they are able to retard setting of the mortar and concrete paste, reduce the amount of required water, improve workability of plastic concrete during placement in formworks and increase air entrainment. Besides lignosulfonates, polyhydroxycarboxylic acids such as calcium or sodium gluconate, calcium or sodium glucoheptonate or glucodeltalactone are increasingly used for improved concrete flowing, delayed setting, extended processibility. Inexpensive low-molecular sugars, in particular sucrose is also used extensively since it is quite effective in delaying portlandite formation and C3S hydration.

Example 1: A mixture consisting of 450 g cement (CEM I 52,5 R), 1350 g sand, 216 g water and 1.35 g cationic lignin (DS 1.3, incorporation as alkaline solution at pH 13, corresponding to 0.3 wt.% cationic lignin mixed with 99.7) was processed into mortar and left for setting. After 7 days, the hardened mortar reached a compressive strength (52.1 MPa) similar to that obtained from the same cement that had been mixed with a comparable amount of the commercial plasticizer Chryso^{®} Plast 620 (52.5 MPa) at the same dosage. Further hardening was observed after 28 days (63.9 MPa) .

Example 2: A mixture prepared as above, however using a somewhat higher mass fraction of cationic lignin (0.8 wt.% mixed with 99.2 wt.% cement), was processed with water (water-to-cement ratio 0.45) into mortar that was left for setting. After 28 days, the hardened mate-rial reached the same compressive strength (58.3 MPa) like a reference material prepared from the same type of cement but using 0.8 wt.% of the commercial plasticizer Chryso^{®} Plast 620 instead of cationic lignin.

### Surface modification by formation of ion pair complexes

Besides pH independent water solubility, the abundance of positively charged quaternary ammonium groups is a strong feature of the cationic lignins. These positive charged groups can be used to form ion pairs which can be described as distinct chemical entities, electrically neutral, formed between ions of opposite charge and held together by Coulomb forces, without formation of a covalent bond. Increased lipophilicity compared with the free ions is one of the attractive features of ion pair complexes. Deposition of alternating layers of lignosulfonates and cationic lignins is expected to impart improved printability to the surface of paper.

Example 1: Preliminary experiments have shown that coating of hand sheets already by one alternating layer of positively charged cationic lignin and negatively charged lignosulfonate can increase the surface hydrophobicity of hand sheets considerably as determined by water contact angle measurements (θ = 63 ° 83 °) due to a decrease in the polar com-ponent of surface energy (18.1 → 7.6 Nm m⁻¹).

## Claims

1. A chemical process for grafting cationic moieties onto kraft lignins for producing lignins soluble across the entire pH scale and at solute concentrations of up to 800 g·L⁻¹ comprising the following steps:
a) extracting lignin from black liquor as obtained during industrial pulping of a hardwood wood using the Kraft process;
b) reacting the lignin obtained in step a) with quaternary ammonium compounds in aqueous alkaline medium;
c) neutralizing the reaction medium to obtain a solution of the cationic lignin.

2. The process according to claim 1, wherein step a) further comprises a purification step.

3. The process according to any of the preceding claims, wherein step c) further comprises a purification or concentration adjustment step.

4. The process according to any of the preceding claims, wherein in step b) the quaternary ammonium compound comprises a reactive site connected to the quaternary ammonium group via a spacer group of alkyl, alkenyl, or aryl, including mixed nature.

5. The process according to any of the preceding claims, wherein in step b) the quaternary ammonium compound comprises a terminal trialkylammonium group.

6. The process according to any of the preceding claims, wherein in step b) the quaternary ammonium compound is 3-chloro-2-hydroxypropyltrimethylammonium chloride.

7. The process according to any of the preceding claims, wherein in step b) the 3-chloro-2-hydroxypropyl-trimethylammonium chloride reacts at a temperature of 25°C to 70°C, a lignin-to-(3-chloro-2-hydroxy)-propyl-trimethylammonium chloride ratio of 0.4 to 4.0, and at a reaction time of up to 24 hours.

8. The process according to any of the preceding claims, wherein in step a) the wood is a eucalyptus wood.

9. A cationic kraft lignin water-soluble across the entire pH scale obtainable by the process of any of claims 1 to 8.

10. The cationic kraft lignin according to the preceding claim, comprising a degree of substitution of at least 0,3.

11. The cationic kraft lignin according to any of the claims 9 and 10, comprising a degree of substitution between 0,3 and 1,7.

12. The use of the cationic kraft lignin according to any of the claims 9 and 10 for antioxidant activity, for removing dyes, for modifying cellulosic pulp to produce paper products, for modifying the surface of paper products and for plasticizing concrete formulations.

## Patentansprüche

1. Chemisches Verfahren zum Aufpfropfen kationischer Anteile auf Kraft-Lignine zur Herstellung von Ligninen, die über die gesamte pH-Skala und bei gelösten Konzentrationen von bis zu 800 g.L⁻¹ löslich sind, umfassend die folgenden Schritte:
a) Extraktion von Lignin aus Schwarzlauge, wie sie beim industriellen Aufschluss eines Laubholzes nach dem Kraft-Verfahren anfällt;
b) Umsetzen des in Schritt a) erhaltenen Lignins mit quaternären Ammoniumverbindungen in wässrigem alkalischem Medium;
c) Neutralisieren des Reaktionsmediums, um eine Lösung des kationischen Lignins zu erhalten.

2. Verfahren nach Anspruch 1, wobei Schritt a) ferner einen Reinigungsschritt umfasst.

3. Verfahren nach einem der vorhergehenden Ansprüche, wobei Schritt c) weiterhin einen Reinigungs- oder Konzentrationseinstellungsschritt umfasst.

4. Verfahren nach einem der vorhergehenden Ansprüche, wobei in Schritt b) die quaternäre Ammoniumverbindung eine reaktive Stelle umfasst, die mit der quaternären Ammoniumgruppe über eine Spacer-Gruppe aus Alkyl, Alkenyl oder Aryl, einschließlich gemischter Natur, verbunden ist.

5. Verfahren nach einem der vorhergehenden Ansprüche, wobei in Schritt b) die quaternäre Ammoniumverbindung eine endständige Trialkylammoniumgruppe umfasst.

6. Verfahren nach einem der vorhergehenden Ansprüche, wobei in Schritt b) die quaternäre Ammoniumverbindung 3-Chlor-2-hydroxypropyl-trimethylammoniumchlorid ist.

7. Verfahren nach einem der vorhergehenden Ansprüche, wobei in Schritt b) das 3-Chlor-2-hydroxypropyl-trimethylammoniumchlorid bei einer Temperatur von 25°C bis 70°C, einem Verhältnis von Lignin zu (3-Chlor-2-hydroxy)-propyl-trimethylammoniumchlorid von 0.4 bis 4.0 und einer Reaktionszeit von bis zu 24 Stunden umgesetzt wird.

8. Verfahren nach einem der vorhergehenden Ansprüche, wobei in Schritt a) das Holz ein Eukalyptusholz ist.

9. Ein kationisches Kraftlignin, das über die gesamte pH-Skala wasserlöslich ist, erhältlich durch das Verfahren nach einem der Ansprüche 1 bis 8.

10. Kationisches Kraftlignin nach dem vorhergehenden Anspruch, das einen Substitutionsgrad von mindestens 0.3 aufweist.

11. Kationisches Kraftlignin nach einem der Ansprüche 9 und 10, das einen Substitutionsgrad zwischen 0.3 und 1.7 aufweist.

12. Verwendung des kationischen Kraftlignins nach einem der Ansprüche 9 und 10 zur antioxidativen Wirkung, zur Entfernung von Farbstoffen, zur Modifizierung von Zellstoff zur Herstellung von Papierprodukten, zur Modifizierung der Oberfläche von Papierprodukten und zur Plastifizierung von Betonformulierungen.

## Revendications

1. Procédé chimique de greffage de moitiés cationiques sur des lignines kraft pour produire des lignines solubles sur toute l'échelle de pH et à des concentrations de soluté allant jusqu'à 800 g.L-¹, comprenant les étapes suivantes :
a) extraction de la lignine de la liqueur noire obtenue lors de la mise en pâte industrielle d'un bois dur par le procédé Kraft;
b) réaction de la lignine obtenue à l'étape a) avec des composés d'ammonium quaternaire en milieu alcalin aqueux;
c) neutraliser le milieu réactionnel pour obtenir une solution de lignine cationique.

2. The method according to claim 1, wherein step a) further comprises a purification step.

3. Le procédé selon l'une des revendications précédentes, dans lequel l'étape c) comprend en outre une étape de purification ou d'ajustement de la concentration.

4. Le procédé selon l'une quelconque des revendications précédentes, dans lequel, à l'étape b), le composé d'ammonium quaternaire comprend un site réactif relié au groupe d'ammonium quaternaire par un groupe d'espacement d'alkyle, d'alcényle ou d'aryle, y compris de nature mixte.

5. Le procédé selon l'une quelconque des revendications précédentes, dans lequel, à l'étape b), le composé d'ammonium quaternaire comprend un groupe trialkylammonium terminal.

6. Le procédé selon l'une quelconque des revendications précédentes, dans lequel, à l'étape b), le composé d'ammonium quaternaire est le chlorure de 3-chloro-2-hydroxypropyl-triméthylammonium.

7. Le procédé selon l'une quelconque des revendications précédentes dans lequel à l'étape b), le chlorure de 3-chloro-2-hydroxypropyl-triméthylammonium réagit à une température de 25°C à 70°C, à un rapport lignine/chlorure de (3-chloro-2-hydroxy)-propyl-triméthylammonium de 0.4 à 4.0, et à un temps de réaction pouvant aller jusqu'à 24 heures.

8. The process according to any of the preceding claims, wherein in step a) the wood is eucalyptus wood.

9. A water-soluble cationic kraft lignin over the entire pH range obtained by the process of any one of claims 1 to 8.

10. The cationic kraft lignin according to the preceding claim, comprising a degree of substitution of at least 0.3.

11. The cationic kraft lignin according to any one of claims 9 and 10, comprising a degree of substitution of between 0.3 and 1.7.

12. L'utilisation de la lignine kraft cationique selon l'une des revendications 9 et 10 pour une activité antioxydante, pour éliminer les colorants, pour modifier la pâte cellulosique afin de produire des produits de papier, pour modifier la surface des produits de papier et pour plastifier les formulations de béton.
